(19) Europäisches Patentamt
European Patent Office
Office européen des brevets

(11) **EP 3 322 060 B1**

(12) **EUROPEAN PATENT SPECIFICATION**

(45) Date of publication and mention
of the grant of the patent:
**25.12.2019 Bulletin 2019/52**

(51) Int Cl.:
**H02J 3/24** (2006.01)

(21) Application number: **16198705.2**

(22) Date of filing: **14.11.2016**

(54) **METHOD OF DAMPING ELECTROMECHANICAL OSCILLATIONS ON A POWER SYSTEM**

VERFAHREN ZUR DÄMPFUNG ELEKTROMECHANISCHER SCHWINGUNGEN AUF EINEM STROMVERSORGUNGSSYSTEM

PROCÉDÉ D'AMORTISSEMENT D'OSCILLATIONS ÉLECTROMÉCANIQUES DANS UN SYSTÈME ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.05.2018 Bulletin 2018/20**

(73) Proprietor: **Nordex Energy GmbH**
**22419 Hamburg (DE)**

(72) Inventors:
• **HAMANN, Niels**
**22297 Hamburg (DE)**
• **DE RIJCKE, Simon**
**22419 Hamburg (DE)**
• **BODE, Florian**
**37154 Northeim (DE)**

(74) Representative: **Hauck**
**Patentanwaltspartnerschaft mbB**
**Postfach 11 31 53**
**20431 Hamburg (DE)**

(56) References cited:
**US-A1- 2010 109 447**

## Description

The present invention pertains to a method of damping electromechanical oscillations on a power system and to a wind farm adapted to provide damping of electromechanical oscillations on the power system.

The term power system is used in the meaning of power grid as well as the term system voltage is used as synonym for grid voltage. The terms wind energy turbine and wind farm stand for wind turbine generator (WTG) and wind power plant (WP), respectively.

WO 2013/004252 A2 relates to a method for damping system oscillations. The oscillations may be damped by controlling e.g. wind turbine generators to inject power to the system in anti-phase with the system oscillations. Instead of controlling one or more wind turbine generators to generate the same anti-phase power signal a plurality of wind turbine generators is controlled so that each of them only generates a part of the anti-phase power signal while all of the wind turbine generators in combination generate the entire anti-phase power signal. For damping of the system oscillations always at least two reference signals are determined for two different power generator units.

EP 2 499 714 A2 discloses a wind turbine for controlling power oscillations on a system of a power system. The wind turbine comprises rotor blades for turning by the wind, an electric generator rotatably coupled to the rotor blades, a power converter responsive to an electricity generated by the electric generator, the power converter for converting the generated electricity to a frequency and a voltage suitable for supply to the power system, and a power converter for regulating voltage on the system supplemented by modulating real power for damping the power oscillations. In order to achieve damping of the power oscillations the power converter regulates at least the system voltage based on the real power for damping. Furthermore, it is disclosed in this document that power oscillation damping for inter-area power oscillations is done by so-called STATCOM devices modulating the voltage at the point of interconnection. It is known that inter-area power occur on transmission systems with long lines and large physical distances between major generation sources. Typically, after a disturbance, groups of generators in a first geographic region swing against another group of generators in a second geographic region separated from the first region by a series of long transmission lines. Naturally, these oscillations are of a very low frequency (typically between 0.1 Hz and 0.7 Hz) and are poorly damped in the absence of supplemental damping.

US 8,618,694 B2 discloses a method for damping oscillations of the electrical power on a power system. A controller is configured to generate a first control signal to cause an inverter of the first wind turbine to modulate the electrical power output by the first wind turbine for damping oscillations of one frequency in electrical power on the power system and to generate a second control signal to control the inverter of the second wind turbine to modulate the electrical power output by the second wind turbine for damping oscillations of a different frequency in the electrical power on the power system.

EP 2 516 164 A2 and US 2016/0141991 A1 refer to sub synchronous resonance (SSR) oscillations in the power system. SSR oscillations occur when the electric power system exchanges energy with the turbine generator at one or more frequencies below the electrical system synchronous frequency. Usually two frequencies have to be considered. Taking a 60 Hz system a supersynchronous frequency may occur at roughly about 70 Hz, while the SSR frequency is at about 10 Hz. Usually the supersynchronous frequency is damped by mechanical system components while the subsynchronous frequency at about 10 Hz requires additional damping.

EP 2 594 004 B1 refers to inter-area oscillations which typically occur in large interconnected power systems with two or more areas interconnected through relatively weak alternating current (AC) transmission lines. If a power oscillation between two areas of a power system is excited the rotor angles of synchronous machines in one area will start to oscillate in counter phase with synchronous machines in the other area and thereby force a flow of active power back and forth between the areas. In order to damp power oscillations in the electricity network a device controller changes the rotational speed reference of the mechanical system of the power generator in order to extract or deposit energy from the electrical output power of the converter device. Therefore, the electrical output power is modulated to damp the power oscillations.

US 2010/0109447 A1 refers to a wide area transmission control of wind farms wherein the dynamic and voltage stability of utility transmission systems is improved by a coordinated control. Electrical measurements of the system including synchronized phasors are supplied to one or more wind farm controllers which in turn perform a regulation function improving the damping of electromechanical oscillations or voltage performance in the utility system. The control structure is of a decentralized nature.

The technical problem of the invention is to provide a method as well as a wind farm for an improved damping of electromechanical oscillations on the power system.

The problem is solved with the method according to claim 1 and a wind farm according to claim 8.

According to the invention a method of damping electromechanical oscillations on a power system is provided. The damping in form of attenuation takes place by injecting reactive power generated by one or more wind energy turbines into the power system. The reactive power controller is adapted to determine a reference reactive power value depending on an actual system voltage $(Q=f(U))$. One important aspect of the reactive power controller is to stabilize the system voltage by injecting reactive power. The method according to the invention comprises measuring oscillation data associated with the power system. The measured oscillation data is filtered to remove a steady state offset from the data. The method according to the invention furthermore comprises a step of determining a frequency value and an amplitude value from the filtered oscillation data and triggering damping if the frequency value of the filtered oscillation data falls within a predetermined frequency interval and/or the amplitude value of the filtered oscillation data exceeds a predetermined threshold value. If damping of the electromechanical oscillations on the power system was triggered the damping of the oscillation data is controlled to compensate a gain and a delay caused by the reactive power controller to the reference reactive power value. Therefore, triggering the damping compensates the delay of the injected reactive power control loop. The method of damping electromechanical oscillations uses a frequency value and/or an amplitude value to detect the electromechanical oscillations and switch the damping on. The damping according the invention is sometimes referred to as a switchable damping, because of its triggering step. The advantage of the switchable damping for electromechanical oscillations is that any interference with controller dynamics during normal operations is avoided. In particular, those parts of the controller dynamics governed by requirements of a grid code are unchanged as long as the measured oscillation data do not indicate any electromechanical oscillations. For the purpose of clarity it shall be noted that the terms "falls within" or "falling within" are referring to a quantity determined as being within a certain frequency interval.

Additionally to the above mentioned switchable power oscillation damping a continuous power oscillation damping is provided according to the invention. The continuous power oscillation damping comprises the steps of correcting a gain and a shift in the filtered oscillation data. These oscillation data are provided as corrected oscillation data. The correction of the corrected oscillation data achieves to compensate a gain and a delay of the reference reactive power value as caused by the reactive power controller. A reactive power setpoint is provided based on the corrected reference reactive power value and the difference between the oscillation data and the corrected oscillation data. The last step compensates the influence of the electromechanical oscillations in the reference reactive power value. The advantage of the continuously operating power oscillation damping is that the system dynamics are not altered by switching or triggering the damping depending on oscillation data.

In a preferred embodiment the measured oscillation data correspond to the actual system voltage or to the reference reactive power value as determined by the active power controller depending on the actual system voltage. Regarding the desired damping of electromechanical oscillations both values are equally suited to determine an amount of reactive power to the system which achieves a suitable damping.

The measured oscillation data is preferably band pass filtered in order to eliminate any influence on frequencies higher and/or lower than frequencies of the electromechanical oscillations on the damping. The frequencies higher and/or lower than the frequencies of the electromechanical oscillations do not contribute to the dynamic behavior. Depending on the details of the implementation the band pass filter may also be a band-stop filter.

The predetermined frequency interval used to detect electromechanical oscillations lies between 0.2 Hz and 1.5 Hz. The predetermined frequency interval may be chosen to be 0.5 Hz to 1.1 Hz and more preferably between 0.6 Hz and 1.0 Hz can be sufficient.

For processing the oscillation data preferably after filtering a 2nd-order lag element is used. The 2nd-order lag element is in the following also called PT2-element. The behavior of the 2nd-order lag element has proven in particular suited to compensate the system dynamics and in particular the dynamic behavior of the reactive power controller. In a preferred embodiment the parameters of the PT2-element are dependent on at least one of the following data: frequency, gain, phase and amplitude. For the configuration of the 2nd-order lag element the amplitude may be omitted, however the amplitude can be used to provide more flexibility to the 2nd-order lag element in modelling a gain. Each of these values, in particular, all of these values help to define a suitable PT2-element providing the right attenuation and phase shift to the measured oscillation data.

The underlying problem of the invention is also solved by a wind farm according to claim 8.

The inventive wind farm is connected to the power system. The wind farm comprises a plurality of wind energy turbines. Furthermore, the wind farm comprises a wind farm controller arranged to output setpoints for active power and for reactive power to each of the wind energy turbines. The wind farm further comprises a measurement device for measuring oscillation data on the power system. Each of the wind energy turbines comprises a power generator driven by a wind rotor and a converter adapted to provide active power and reactive power to a power system. In order to stabilize the power system a reactive power controller for providing a reference reactive power value depending on the actual system value is provided. The actual system value is the actual system voltage. Furthermore, a filter unit is been comprised within the farm controller. The filter unit can be a software part of the reactive power controller or a separate hardware element. The filter unit is adapted to remove a steady state offset from the oscillation data. A power oscillation damping device (POD-device) is additionally comprised within the farm controller. The POD-device is arranged for damping oscillation data in order to compensate a gain and a delay applied to the reference reactive power value by the reactive power controller. The delay of the reference reactive power value corresponds to a delay in the injected reactive power. The farm controller is adapted to output a reactive power setpoint to at least one of the plurality of the wind energy turbines based on the reference reactive power value and the compensated output of the POD-device. The POD-device operates on the level of the farm controller and seeks to compensate a gain and a delay in the reference reactive power value as generated by the electromechanical oscillations in the system voltage.

In a preferred embodiment the farm controller comprises a switch unit for determining a frequency value and an amplitude value from the filtered oscillation data. Furthermore, a threshold value for the amplitude value and a predetermined frequency interval for the frequency values are provided in order to detect electromechanical oscillations on the power system. The switch device is adapted to switch the POD-device in its on state based on the following criteria: the frequency value determined from the filtered oscillation data falling within the predetermined frequency interval and/or the amplitude value determined from the filtered oscillation data exceeding the predetermined threshold value. Switching the switch device into its on state triggers the damping of the electromechanical oscillations.

The invention is described in detail with reference to the following Figures:

Fig. 1  shows simulation results with voltage and reactive power at a coupling point of a wind energy turbine to a power system showing electromechanical oscillations without any damping,

Fig.2   shows the wind energy turbine control loop for the voltage,

Fig. 3  shows the integration of two power oscillation damping (POD)-devices integral into a wind farm controller,

Fig. 4  shows a switchable POD-device integrated into a wind farm controller,

Fig. 5  shows a block diagram for a switchable POD-device,

Fig. 6  shows a second POD-device based on damping the measured system voltage,

Fig. 7  shows a simulation and measurement results for both POD-devices, and

Fig. 8  shows the effect of a POD-device on the system voltage.

Electromechanical oscillations limit the transmission capacity when the electrical distance from a production surplus area to the main load center is significant. Electromechanical oscillations occur when the rotor angle of a synchronous machine starts swinging after a disturbance in the power system. If damping is insufficient, the angular swinging is possible leading to a loss of stability, system separation and in the worst case a large scale blackout.

Modern wind power plants do not directly participate to the classical rotor angle swinging that occurs during the electromechanical oscillations. However, wind power affects the damping of electromechanical oscillations, because the rotor of a modern wind energy turbine is synchronously decoupled from the system.

Depending on the system and its ability to damp electromechanical oscillations a situation may occur in which the integration of a wind farm with standard control settings leads to an undamped power system oscillation. It even may occur that oscillations are amplified by using the standard controller.

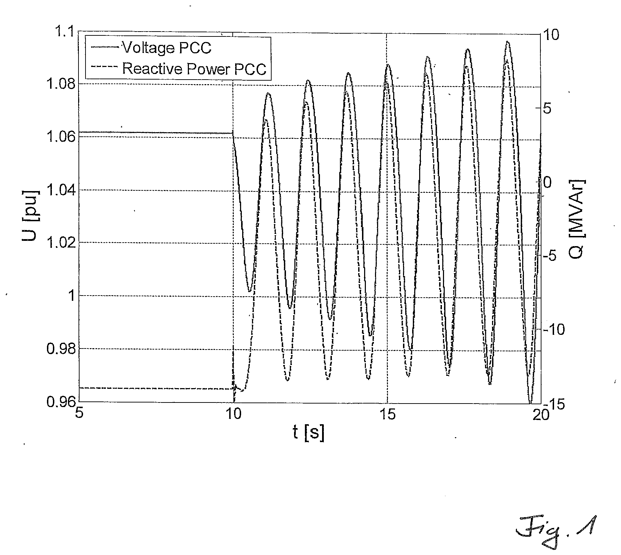

Fig. 1 shows a simulation, in which at the point of common coupling (PCC) the voltage and the reactive power of a wind energy turbine using standard control settings leads to an amplified oscillation. Reactive power is almost in phase with system voltage, amplifying the voltage oscillations and consequently the electromechanical oscillations. Such a situation and its analysis is not standardly covered by the controller design and tuning; the voltage controller is primarily designed to fulfil the reactive power dynamics following voltage variations, obtaining damping for electromechanical oscillations is rather exceptionally addressed. The results in Fig. 1 emphasize the need to ensure that the wind energy turbine does not amplify occurring power system oscillations.

The amplifying behavior shown in Fig. 1 is turned into a decrease of the oscillations by a proper phase shift of the reactive power to the voltage. The original phase shift is the result of various delays and dynamics in the overall reactive power control loop. The design of the activated control mode in which the reactive power is a function of the voltage (Q = f(U)) incorporates the effect of these delays and dynamics properly to fulfil the required reactive power dynamics i.e. reaching 90 % of the setpoint value within 1.0 second. These controller settings however lead to an undesirable reactive power response to voltage oscillations between 0.6 Hz and 1.0 Hz. For a proper damping it is necessary to combine the damping of electromechanical oscillations with the required reactive power dynamics.

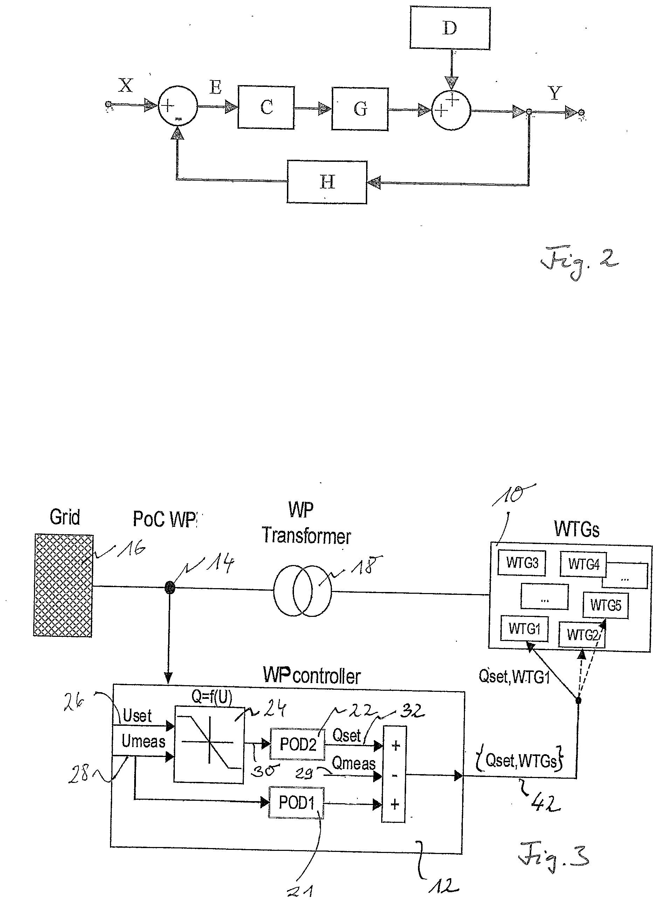

A suitable approach can be best understood by using a transfer function analysis of the control loop. Fig. 2 shows the control loop with X as the voltage setpoint, C the wind energy turbine, G the system, and H the measurement. Using the transfer function approach leads to the following dependency of the output signal Y from both input signals, the voltage setpoint X and the disturbance D:

$$Y = \frac{CG}{1+CGH}X + \frac{1}{1+CGH}D.$$

The second part of the equation determines to which extent the disturbances D are suppressed or amplified by the wind energy turbine. For the attenuation of electromechanical oscillations it is therefore necessary that the amplitude of 1/(1+CGH) has a negative amplitude in the frequency range of interest and simultaneously ensures a desired step response with a sufficient phase margin to avoid controller instability.

An additional aspect for the electromechanical power oscillations is to ensure the above mentioned dynamic requirements at varying short-circuit power values at the point of coupling. The short-circuit power does not directly influence the set phase shift, though the controller dynamics slightly change. A lower short-circuit power causes higher voltage deviations in the system for the same reactive power injection, the phase margin of the controller is typically reduced, making the controller more sensitive.

Fig. 3 shows schematically an approach for damping of electromechanical oscillations using a wind farm controller. Fig. 3 shows a wind farm 10 with a plurality of wind energy turbines WTG1 - WTG5. The wind farm 10 is controlled by a wind farm controller 12. The wind farm controller 12 provides a sum of reactive power setpoints ($Q_{set,WTGs}$) 42 for the wind energy turbines in the wind farm 10. The sum of reactive power setpoints 42 is split up into individual reactive power setpoints, for each wind energy turbine in the wind farm 10. The wind farm controller 12 is connected to the point of common coupling 14 of the wind farm 10.

The wind farm 10 is connected to the power system 16 via a wind farm transformer 18.

In order to understand the different approaches of the POD1-device 21 and the POD2-device 22 it is helpful to consider the reactive power controller 24 first. The reactive power controller 24 receives a constant voltage setpoint $U_{set}$ 26 and a measured voltage value $U_{meas}$ 28. If the measured voltage value $U_{meas}$ 28 deviates from the constant voltage setpoint $U_{set}$ 26 the reactive power controller 24 supplies a reference reactive power value $Q_{ref}$ 30. The main function of the reference reactive power value $Q_{ref}$ 30 is to stabilize the power system voltage.

The POD2-device 22 is a switchable device and operates using the reference reactive power value $Q_{ref}$ 30 as input. The POD2-device 22 outputs a reactive power setpoint $Q_{set}$ 32. A measured reactive power $Q_{meas}$ 29 is subtracted from the reactive power set point 32 in order to provide the sum of reactive power setpoints $Q_{set, WTGs}$ 42 for the wind energy turbines of the wind farm.

The POD1-device 21 operates based on the measured system voltage $U_{meas}$ 28. The output of the POD1-device 21 is the sum of setpoint reactive power setpoints ($Q_{set, WTGs}$) 42 for the wind energy turbines WTG1-5 of the wind farm 10.

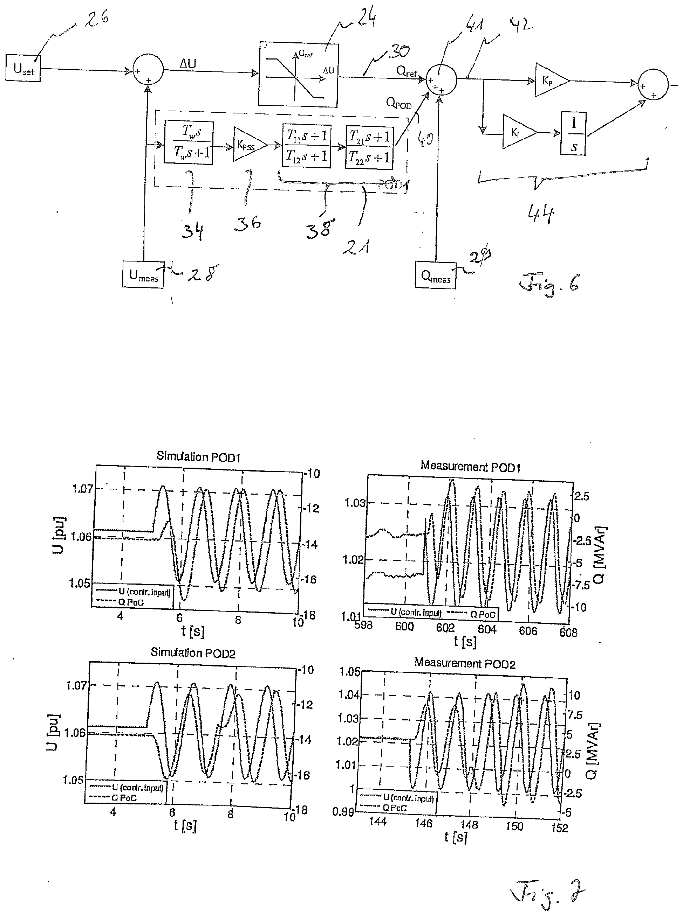

The function of the POD1-device 21 is explained in detail with reference to Fig. 6. Fig. 6 shows a constant voltage setpoint $U_{set}$ 26 and the measured system voltage $U_{meas}$ 28. The POD1-device 21 receives the measured system voltage $U_{meas}$ 28 as input. The POD1-device 21 consists of a filter 34, a gain 36 and a lead-lag compensation 38.

The filter 34 is adapted as a high-pass filter to eliminate a steady state offset of the POD control loop on the overall response. Moreover, low frequency signals are blocked by the filter. Only signals above a defined frequency are passed to be damped. Alternatively, a band pass filter can be used to also eliminate influences of the damping on the higher frequency content in the oscillatory input.

The gain 36 determines the amount of damping introduced. The gain must be high enough to provide a sufficient damping (if for instance the Q(U)-path does not provide the desired phase shift, the POD-path should be dominant) and sufficiently low to avoid unstable behavior of the overall controller. Thereto, the balance of gains between the control path without POD and the POD-path needs to be well tuned.

It is also possible to include adaptive gain schedule techniques to compensate nonlinear effects of the system, e.g. large differences in the systems response over the full operation range.

The lead-lag compensation 38 serves as a compensation of the delay caused by the cycle times and dynamics in the overall control loop. This compensation element must ensure that reactive power is injected with a desired phase angle with respect to the oscillatory input.

An output reactive power $Q_{POD}$ 40 of the POD 1-device 21, the measured reactive power $Q_{meas}$ 29 together with the reference reactive power $Q_{ref}$ 30 as output by the reactive power controller 24 are used to determine a control reactive power setpoint 42. Preferable a summation element 41 sums up the values determined as the control reactive power setpoint 42. The control reactive power setpoint 42 is applied to a PI-controller 44 and split up into one or more setpoints for different wind energy turbines.

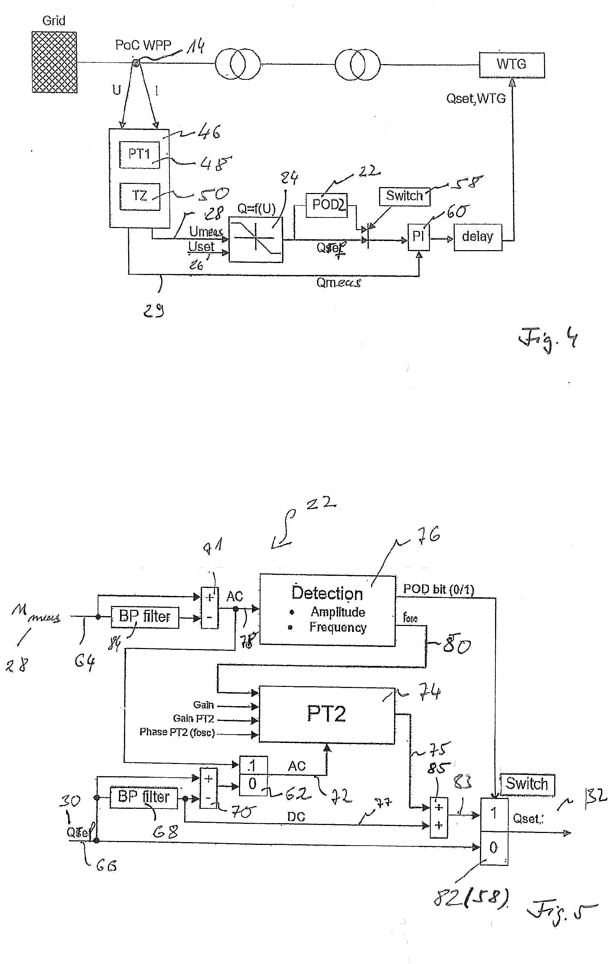

The function of the POD2-device 22 is shown in Figures 4 and 5. Fig. 4 shows in a schematical view the measurement device 46 which provides a measured voltage value $U_{meas}$ 28 and a measured reactive power value $Q_{meas}$ 29 by measuring the a voltage U and a current I close the point of common coupling 14. The dynamical behavior of the measuring device 46 can be described by using a PT1-element 48 and a dead time element 50. The PT1-element 48 corresponds to a $1^{st}$-order lag element. The measured voltage value $U_{meas}$ 28 together with the voltage setpoint $U_{set}$ 26 are applied to the reactive power controller 24. The reactive power controller 24 outputs a reference reactive power $Q_{ref}$ 30 which is applied to a PI-controller 60 together with the measured reactive power value $Q_{meas}$ 29 bypassing the reactive power controller 24 and the switch unit 58. The switch unit can be a hardware switch or a software switch.

During normal operation a switch unit 58 provides the reference reactive power $Q_{ref}$ 30 to the PI-controller 60. If a frequency value and an amplitude value of the measured voltage $U_{meas}$ 28 indicate electromechanical oscillations on the power system, the switch unit 58 disconnects the reference reactive power $Q_{ref}$ 30 from the PI-controller 60 and connects the POD2-device 22 with its output value to the PI-controller 60. The switching is triggered if a detection element 76 (cp. Fig. 5) detects electromechanical oscillations on the power system.

Fig. 5 explains the function of the POD2-device 22 in detail. As indicated by an additional switch unit 62 the POD2-device 22 can be configured to use either the measured voltage $U_{meas}$ 28 at an input 64 or the reference reactive power $Q_{ref}$ 30 at an alternative input 66.

In a first step the use of the reference reactive power $Q_{ref}$ 30 at the alternative input 66 is described. The reference reactive power $Q_{ref}$ 30 is applied to a band pass filter 68. The band pass filter 68 may also be considered as a band-stop filter which blocks frequencies within its band(s). The difference of the output of the band pass filter 68 and the reference reactive power $Q_{ref}$ 30 constitutes an AC signal 72. Together with the original reference reactive power $Q_{ref}$. The difference as provided by a subtractor 70 is applied to $2^{nd}$ order lag-element (PT2-element) 74. For processing the reference reactive power $Q_{ref}$ 30 as input the switch unit 62 is set to 0.

The detection of electromechanical oscillations is carried out by the detection element 76. Based on an AC signal 78 which is the output of a subtractor 71 subtracting the measured system voltage $U_{meas}$ 28 and a band pass filtered signal 84. The detection element 76 determines whether the AC signal 78 of the measured voltage $U_{meas}$ 28 falls within a frequency interval of electromechanical oscillations. The frequency interval is usually between 0.2 Hz and 1.5 Hz. The detection element 76 also determines whether the amplitude of the AC signal 78 exceeds a predefined threshold value. The frequency value of the AC signal 78 is output as oscillation frequency $f_{osc}$ 80 and applied to the $2^{nd}$ order-lag element 74 (PT2-element). If the detection element 76 detects electromechanical oscillations a POD-bit is set and processed in the switch 82. If the POD bit is set the switch 82 switches to its on state (1) and forwards reactive power $Q_{set,POD}$ 32 based on the output 83 of a summation element 85. The PT2-element 74 uses a PT2-gain and a PT2-phase and the detected frequency $f_{osc}$ 80 in order to provide a phasing to the AC signal 72 of the reference reactive power $Q_{ref}$ 30 for damping. The output 75 of the $2^{nd}$ order-lag element 74 is added to the DC signal 77 as provided by the band pass filter 68 using a summation element 85.

If the switch unit 62 is switched to 0, the AC signal 72 applied to the PT2-element 74 is based on the reference reactive power $Q_{ref}$ 30. However, the AC signal 78 is still used to detect electromechanical oscillations. The reference reactive power $Q_{ref}$ 30 as applied to the input 66 is forwarded to a band pass filter 68 which works as band-stop filter to provide a DC-signal 77. A subtractor 70 subtracts the DC signal 77 from the original signal of the reference reactive power $Q_{ref}$ 30 to provide the AC signal 72, which is applied to the $2^{nd}$ order lag element 74.

Fig. 7 shows simulation results and measurement results for the voltage and the reactive power for a POD1-device 21 and a POD2-device 22. For the POD2-device 22 it is within the reactive power signal Q visible that the POD2-device 22 is triggered at the time of about 7.5 seconds. For the measured values of the reactive power the POD2-device 22 is triggered at about 148 seconds.

The characteristics of POD1-device and the POD2-device can be summarized as follows:
In the continuous approach of the POD1-device the continuous activation ensures an adequate phase shift between voltage and reactive power at the point of coupling, also during power system oscillations with low amplitude. A clean control approach with immediate damping as soon as first oscillation swings occur is used. No oscillation detection is needed. This contributes to a high reliability and a low susceptibility to failure. The switchable approach of the POD2-device can be summarized as avoiding interference with controller dynamics during normal operation. The POD2-device is only actuated when power system oscillations are detected. The POD2-device settings can be set without influencing the step response dynamics of the system. System interactions are avoided during normal operation. Oscillation detecting makes the POD2-event possible.

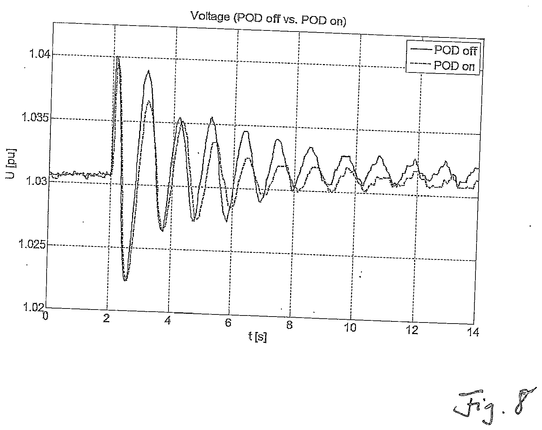

Fig. 8 shows the voltage behavior with a power oscillation damping on versus power oscillations damping off. As can be seen clearly from Fig. 8, the voltage oscillation with POD1 are stronger damped than without the POD.

List of reference numerals

| | |
|---|---|
| 10 | Wind farm |
| WTG 1-5 | Wind energy turbine |
| 12 | Wind farm controller |
| 16 | Power system |
| 18 | Wind farm transformer |
| 21 | POD 1-device |
| 22 | POD2-device |
| 24 | Reactive power controller |
| 26 | Constant voltage setpoint |
| 28 | Measured voltage value |
| 29 | Measured reactive power value |
| 30 | Reference reactive power |
| 32 | Reactive power setpoint |
| 40 | Output reactive power $Q_{POD}$ |
| 42 | Sum of reactive power setpoint $Q_{set,WTGs}$ |
| 46 | Measurement device |
| 48 | PT1-device |
| 58 | Switch unit |
| 60 | PI-controller |
| 62 | Additional switch unit |

| | |
|---|---|
| 64 | Input |
| 66 | Alternative input |
| 68 | Band pass filter |
| 70 | Subtractor |
| 71 | Subtractor |
| 72 | AC signal |
| 74 | 2nd order lag-element /PT2-element |
| 76 | Detection element |
| 78 | AC signal |
| 80 | Oscillation frequency $f_{osc}$ |
| 82 | Switch |
| 84 | Band pass filtered signal |
| 85 | Summation element |

**Claims**

1.  Method of damping electromechanical oscillations on a power system (16) by injecting reactive power generated by one or more wind energy turbines (WTG 1-5), wherein a reactive power controller (24) is adapted to determine a reference reactive power value ($Q_{ref}$) (30) depending on an actual system voltage ($U_{meas}$) (28), the method comprising:

    - measuring (46) oscillation data (28) associated with the power system (16),
    - filtering (84, 71) the measured oscillation data (28) to remove a steady state offset, thereby obtaining filtered oscillation data,
    - determining (76) a frequency value (80) and an amplitude value from the filtered oscillation data (78), and
    - triggering (82) a switchable power oscillation damping (74) according to at least one criteria of the following:

        o the frequency value (80) determined from the filtered oscillation data (78) falling within a predetermined frequency interval, and
        o the amplitude value determined from the filtered oscillation data (78) exceeding a predetermined threshold value,

    - wherein the switchable power oscillation damping (74) is achieved by compensating a gain and a delay caused by the reactive power controller (24) to the reference reactive power value ($Q_{ref}$), thereby obtaining a corrected reference reactive power value
    - wherein, additionally to the above switchable (82) power oscillation damping, a continuous power oscillation damping (60) is provided, which comprises the steps of correcting a gain and a shift in either the corrected reference reactive power value in case the switchable power oscillation damping is triggered, or in the reference reactive power value ($Q_{ref}$) in case the switchable power oscillation damping is not triggered , thereby compensating a gain and a delay caused by the reactive power controller (24),
    - outputting a reactive power setpoint ($O_{set,WTGs}$) to at least one of the plurality of wind energy turbines (WTG 1-5) based on at least one of: the reference reactive power value ($Q_{ref}$) and the corrected reference reactive power value.

2.  Method according to claim 1, wherein the measured oscillation data correspond to the actual system voltage ($U_{meas}$).

3.  Method according to claim 1, wherein the measured oscillation data correspond to the reference reactive power ($Q_{ref}$) as determined depending on the actual system voltage ($U_{meas}$).

4.  Method according to one of the claims 1 to 3, wherein the step of filtering of the measured oscillation data includes band-pass filtering in order to eliminate an influence of frequencies higher and lower than frequencies of the electromechanical oscillations on the damping.

5.  Method according to one of the preceding claims, wherein the predetermined frequency interval is between 0.2 Hz and 1.5 Hz, preferably between 0.5 Hz and 1.1 Hz, and more preferably between 0.6 Hz and 1 Hz.

6.  Method according to one for the preceding claims, wherein the oscillation data are applied to a 2nd-order lag element (PT2).

7.  Method according to claim 6, wherein the 2nd-order lag element (PT2) depends on at least one of the following data obtained from the oscillation data: frequency, gain, phase and amplitude.

8.  A wind farm (10) connected to a power system (16), the wind farm (10) comprising a plurality of wind energy turbines (WTG 1-5), comprising a wind farm controller (12) arranged for providing setpoints for active and reactive power ($Q_{set, WTGs}$) to each of the plurality of wind energy turbines (WTG 1-5) and a measurement device for measuring oscillation data (28) associated with the power system (16), the wind farm controller comprising:

    - a filter unit (34) adapted for removing a steady state offset from the measured oscillation data (28), thereby obtaining filtered oscillation data,
    - a reactive power controller (24) arranged for providing a reference reactive power value ($Q_{ref}$) depending on an actual system voltage ($U_{meas}$),

- a switchable power oscillation damping device (POD) adapted for damping electromechanical oscillations on the power system (16) and to compensate at least one of the following effects caused by the reactive power controller:

    o a gain applied to the reference reactive power value ($Q_{ref}$) by the reactive power controller (24) and
    o a delay applied to the reference reactive power value ($Q_{ref}$) by the reactive power controller (24),thereby obtaining a corrected reference reactive power value,

- a detection element (76) adapted for determining a frequency value (80) and an amplitude value from the filtered oscillation data (28), and for triggering (82) the damping of the switchable power oscillation damping device according to at least one criteria of the following:

    o the frequency value (80) determined from the filtered oscillation data (78) falling within a predetermined frequency interval, and
    o the amplitude value determined from the filtered oscillation data (78) exceeding a predetermined threshold value

- a continuous power oscillation damping device (60), adapted for carrying out the steps of correcting a gain and a shift in either the corrected reference reactive power value in case the switchable power oscillation damping is triggered, or in the reference reactive power value ($Q_{ref}$) in case the switchable power oscillation damping is not triggered, thereby compensating a gain and a delay caused by the reactive power controller,
- wherein the wind farm controller (12) is adapted to output a reactive power setpoint ($Q_{set, WTGs}$) to at least one of the plurality of wind energy turbines (WTG 1-5) based on at least one of: the reference reactive power value ($Q_{ref}$) and the corrected reference reactive power value output of the switchable power oscillation damping device (POD).

**9.** The wind farm according to claim 8, wherein the wind farm controller comprises a switch unit arranged for determining a frequency value and a amplitude value from the filtered oscillation data and to switch the POD-device based on at least one of the following criteria:

    o the frequency value determined from the filtered oscillation data falling within a predetermined frequency interval and
    o the amplitude value determined from the filtered oscillation data exceeding a predetermined threshold value.

**10.** The wind farm according to claim 8 or 9, being adapted for damping electromechanical oscillations on the power system according to one of the preceding method claims 1 to 8.

**Patentansprüche**

**1.** Verfahren zur Dämpfung elektromechanischer Schwingungen auf einem Stromversorgungssystem (16) durch Einspeisung von Blindleistung, die von einer oder mehreren Windenergieanlagen (WTG 1-5) erzeugt wird, wobei eine Blindleistungssteuerung (24) angepasst ist, um einen Referenzblindleistungswert ($Q_{ref}$) (30) in Abhängigkeit von einer tatsächlichen Systemspannung ($U_{meas}$) (28) zu bestimmen, wobei das Verfahren Folgendes umfasst:

    - Messen (46) von Schwingungsdaten (28), die dem Stromversorgungssystem (16) zugeordnet sind,
    - Filtern (84, 71) der gemessenen Schwingungsdaten (28), um einen stationären Offset zu entfernen, wodurch gefilterte Schwingungsdaten erhalten werden,
    - Bestimmen (76) eines Frequenzwertes (80) und eines Amplitudenwertes aus den gefilterten Schwingungsdaten (78), und
    - Auslösen (82) einer schaltbaren Leistungsschwingungsdämpfung (74) nach mindestens einem der folgenden Kriterien:

        o der Frequenzwert (80), der aus den gefilterten Schwingungsdaten (78) bestimmt wird, fällt in ein vorgegebenes Frequenzintervall, und
        o der Amplitudenwert, der aus den gefilterten Schwingungsdaten (78) bestimmt wird, überschreitet einen vorbestimmten Schwellenwert,

    - wobei die schaltbare Leistungsschwingungsdämpfung (74) durch Kompensieren einer Verstärkung und einer Verzögerung, die durch die Blindleistungssteuerung (24) verursacht wird, auf den Referenzblindleistungswert ($Q_{ref}$) erreicht wird, wodurch ein korrigierter Referenzblindleistungswert erhalten wird
    - wobei zusätzlich zu der vorstehend schaltbaren (82) Leistungsschwingungsdämpfung eine kontinuierliche Leistungsschwingungsdämpfung (60) vorgesehen ist, die die Schritte des Korrigierens einer Verstärkung und einer Verschiebung entweder des korrigierten Referenzblindleistungswertes, falls die schaltbare Leistungsschwingungsdämpfung ausgelöst wird, oder des Referenzblindleistungswertes (Q_ref), falls die schaltbare Leistungsschwingungsdämpfung nicht ausgelöst wird, umfasst, wodurch eine Verstärkung und eine Verzögerung kompensiert wird, die durch die Blindleistungssteuerung (24) verursacht wird,

- Ausgeben eines Blindleistungssollwerts (Q_{set, WTGs}) an mindestens eine der Vielzahl von Windenergieanlagen (WTG 1-5) basierend auf mindestens einem der folgenden Werte: dem Referenzblindleistungswert (Q_ref) und dem korrigierten Referenzblindleistungswert.

2. Verfahren nach Anspruch 1, wobei die gemessenen Schwingungsdaten der tatsächlichen Systemspannung (U_meas) entsprechen.

3. Verfahren nach Anspruch 1, wobei die gemessenen Schwingungsdaten der Referenzblindleistung (Q_ref) entsprechen, die in Abhängigkeit von der tatsächlichen Systemspannung (U_meas) bestimmt wird.

4. Verfahren nach einem der Ansprüche 1 bis 3, wobei der Schritt der Filterung der gemessenen Schwingungsdaten eine Bandpassfilterung beinhaltet, um einen Einfluss von Frequenzen zu eliminieren, die höher und niedriger als Frequenzen der elektromechanischen Schwingungen auf die Dämpfung sind.

5. Verfahren nach einem der vorhergehenden Ansprüche, wobei das vorgegebene Frequenzintervall zwischen 0,2 Hz und 1,5 Hz, vorzugsweise zwischen 0,5 Hz und 1,1 Hz, und besonders bevorzugt zwischen 0,6 Hz und 1 Hz liegt.

6. Verfahren gemäß einem der vorhergehenden Ansprüche, wobei die Schwingungsdaten auf ein Verzögerungselement zweiter Ordnung (PT2) angewendet werden.

7. Verfahren nach Anspruch 6, wobei das Verzögerungselement zweiter Ordnung (PT2) von mindestens einem der folgenden aus den Schwingungsdaten erhaltenen Daten abhängt: Frequenz, Verstärkung, Phase und Amplitude.

8. Windpark (10), der mit einem Stromversorgungssystem (16) verbunden ist, wobei der Windpark (10) eine Vielzahl von Windkraftanlagen (WTG 1-5) umfasst, umfassend eine Windparksteuerung (12), die zum Bereitstellen von Sollwerten für Wirk- und Blindleistung (Q_{set, WTGs}) für jede der Vielzahl von Windkraftanlagen (WTG 1-5) angeordnet ist, und eine Messvorrichtung zum Messen von Schwingungsdaten (28), die dem Stromversorgungssystem (16) zugeordnet sind, wobei die Windparksteuerung umfasst:

- eine Filtereinheit (34), die zum Entfernen eines stationären Offsets aus den gemessenen Schwingungsdaten (28) angepasst ist, um dadurch gefilterte Schwingungsdaten zu erhalten,
- eine Blindleistungssteuerung (24), die zum Bereitstellen eines Referenzblindleistungswertes (Q_ref) in Abhängigkeit von einer tatsächlichen Systemspannung (U_meas) angeordnet ist,
- eine schaltbare Leistungsschwingungsdämpfungsvorrichtung (POD), die zum Dämpfen elektromechanischer Schwingungen auf dem Stromversorgungssystem (16) und zum Kompensieren mindestens eines der folgenden Effekte, die durch die Blindleistungssteuerung verursacht werden, geeignet ist:

  o eine Verstärkung, die von der Blindleistungssteuerung (24) auf den Referenzblindleistungswert (Q_ref) angewendet wird, und
  o eine Verzögerung, die von der Blindleistungssteuerung (24) auf den Referenzblindleistungswert (Q_ref) angewandt wird, wodurch ein korrigierter Referenzblindleistungswert erhalten wird,

- ein Erfassungselement (76), das zum Bestimmen eines Frequenzwertes (80) und eines Amplitudenwertes aus den gefilterten Schwingungsdaten (28) und zum Auslösen (82) der Dämpfung der schaltbaren Leistungsschwingungsdämpfungsvorrichtung gemäß mindestens einem der folgenden Kriterien geeignet ist:

  o der Frequenzwert (80), der aus den gefilterten Schwingungsdaten (78) bestimmt wird, fällt in ein vorgegebenes Frequenzintervall, und
  o der Amplitudenwert, der aus den gefilterten Schwingungsdaten (78) bestimmt wird, überschreitet einen vorbestimmten Schwellenwert

- eine Vorrichtung (60) zum Dämpfen von kontinuierlichen Leistungsschwingungen, die zum Ausführen der Schritte des Korrigierens einer Verstärkung und einer Verschiebung entweder des korrigierten Referenzblindleistungswertes, falls die schaltbare Leistungsschwingungsdämpfung ausgelöst wird, oder des Referenzblindleistungswertes (Q_ref), falls die schaltbare Leistungsschwingungsdämpfung nicht ausgelöst wird, geeignet ist, wodurch eine Verstärkung und eine Verzögerung kompensiert wird, die durch die Blindleistungssteuerung verursacht wird,
- wobei die Windparksteuerung (12) angepasst ist, um einen Blindleistungssollwert (Q_{set, WTGs}) an mindestens eine der Vielzahl von Windkraftanlagen (WTG 1-5) auszugeben, basierend auf mindestens einem von: dem Referenzblindleistungswert (Qref) und dem korrigierten Referenz-blindleistungswert der schaltbaren Leistungs-schwingungsdämpfungsvorrichtung (POD).

**9.** Windpark nach Anspruch 8, wobei die Windparksteuerung eine Schalteinheit umfasst, die zum Bestimmen eines Frequenzwertes und eines Amplitudenwertes aus den gefilterten Schwingungsdaten und zum Schalten der POD-Vorrichtung basierend auf mindestens einem der folgenden Kriterien angeordnet ist:

o den Frequenzwert, der aus den gefilterten Schwingungsdaten bestimmt wird, fällt in ein vorgegebenes Frequenzintervall, und
o der Amplitudenwert, der aus den gefilterten Schwingungsdaten bestimmt wird, überschreitet einen vorbestimmten Schwellenwert.

**10.** Windpark nach Anspruch 8 oder 9, der zum Dämpfen elektromechanischer Schwingungen am Stromversorgungssystem nach einem der vorhergehenden Verfahren nach Anspruch 1 bis 8 ausgelegt ist.

**Revendications**

**1.** Procédé d'amortissement d'oscillations électromécaniques dans un système électrique (16) par injection d'une puissance réactive générée par une ou plusieurs éoliennes (WTG 1-5), dans lequel un dispositif de commande de puissance réactive (24) est conçu pour déterminer une valeur de puissance réactive de référence ($Q_{ref}$) (30) en fonction d'une tension actuelle de système ($U_{meas}$) (28), le procédé consistant à :

- mesurer (46) des données d'oscillations (28) associées au système électrique (16),
- filtrer (84, 71) les données d'oscillations mesurées (28) pour retirer un décalage à l'état stabilisé, obtenant ainsi des données d'oscillations filtrées,
- déterminer (76) une valeur de fréquence (80) et une valeur d'amplitude à partir des données d'oscillations filtrées (78), et
- déclencher (82) un amortissement d'oscillations de puissance commutable (74) selon au moins un critère parmi les suivants :

o la valeur de fréquence (80) déterminée à partir des données d'oscillations filtrées (78) tombant dans un intervalle prédétermi-né de fréquences, et
o la valeur d'amplitude déterminée à partir des données d'oscillations filtrées (78) dépassant une valeur seuil prédéterminée,

- dans lequel l'amortissement d'oscillations de puissance commutable (74) est réalisé en compensant un gain et un retard causés par le dispositif de commande de puissance réactive (24) à la valeur de puissance réactive de référence ($Q_{réf}$), obtenant ainsi une valeur de puissance réactive de référence corrigée
- dans lequel, en plus de l'amortissement d'oscillations de puissance (82) commutable ci-dessus, un amortissement d'oscillations de puissance continu (60) est fourni, lequel comprend les étapes de correction d'un gain et d'un décalage dans soit la valeur de puissance réactive de référence corrigée dans le cas où l'amortissement d'oscillations de puissance commutable est déclenché, ou dans la valeur de puissance réactive de référence ($Q_{ref}$) dans le cas où l'amortissement d'oscillations de puissance commutable n'est pas déclenché, compensant ainsi un gain et un retard causés par le dispositif de commande de puissance réactive (24),
- produire un point de consigne de puissance réactive ($Q_{set, WTGs}$) à au moins une parmi la pluralité d'éoliennes (WTG 1-5) basé sur au moins une parmi la valeur de puissance réactive de référence ($Q_{réf}$) et la valeur de puissance réactive de référence corrigée.

**2.** Procédé selon la revendication 1, dans lequel les données d'oscillations mesurées correspondent à la tension actuelle de système ($U_{meas}$).

**3.** Procédé selon la revendication 1, dans lequel les données d'oscillations mesurées correspondent à la puissance réactive de référence ($Q_{réf}$) telle que déterminée en fonction de la tension actuelle de sys-tème ($U_{meas}$).

**4.** Procédé selon l'une des revendications 1 à 3, dans lequel l'étape de filtrage des données d'oscillations mesurées comprend le filtrage passe-bande pour éliminer une influence des fréquences supérieures et inférieures aux fréquences des oscillations électromécaniques sur l'amortissement.

**5.** Procédé selon l'une des revendications précédentes, dans lequel l'intervalle prédéterminé de fréquences varie entre 0,2 Hz et 1,5 Hz, de préférence entre 0,5 Hz et 1,1 Hz, et plus préférablement entre 0,6 Hz et 1 Hz.

**6.** Procédé selon l'une des revendications précédentes, dans lequel les données d'oscillations sont appliquées à un élément de retard de deuxième ordre (PT2).

**7.** Procédé selon la revendication 6, dans lequel l'élément de retard de deuxième ordre (PT2) dépend d'au moins une parmi les données suivantes obtenues à partir des données d'oscillations : fréquence, gain, phase et amplitude.

**8.** Parc éolien (10) connecté à un système électrique (16), le parc éolien (10) comprenant une pluralité d'éoliennes (WTG 1-5), comprenant un dispositif de commande de parc éolien (12) conçu pour fournir des points de consigne pour une puissance active et réactive ($Q_{set, \, WTGs}$) à chacune de la pluralité d'éoliennes (WTG 1-5) et un dispositif de mesure pour mesurer des données d'oscillations (28) associées au système électrique (16), le dispositif de commande du parc éolien comprenant :

- une unité de filtrage (34) conçue pour retirer un décalage à l'état stabilisé des données d'oscillations mesurées (28), obtenant ainsi des données d'oscillations filtrées,
- un dispositif de commande de puissance réactive (24) conçu pour fournir une valeur de puissance réactive de référence ($Q_{réf}$) en fonction d'une tension actuelle de système ($U_{meas}$),
- un dispositif d'amortissement d'oscillations de puissance commutable (POD) conçu pour amortir des oscillations électromécaniques dans le système électrique (16) et pour compenser au moins un des effets suivants causés par le dispositif de commande de puissance réactive :

  ◦ un gain appliqué à la valeur de puissance réactive de référence ($Q_{réf}$) par le dispositif de commande de puissance réactive (24) et
  ◦ un retard appliqué à la valeur de puissance réactive de référence ($Q_{ref}$) par le dispositif de commande de puissance réactive (24), obtenant ainsi une valeur de puissance réactive de référence corrigée,

- un élément de détection (76) conçu pour déterminer une valeur de fréquence (80) et une valeur d'amplitude à partir des données d'oscillations filtrées (28) et pour déclencher (82) l'amortissement du dispositif d'amortissement d'oscillations de puissance commutable selon au moins un des critères suivants :

  ◦ la valeur de fréquence (80) déterminée à partir des données d'oscillations filtrées (78) tombant dans un intervalle prédéterminé de fréquences, et
  ◦ la valeur d'amplitude déterminée à partir des données d'oscillations filtrées (78) dépassant une valeur seuil prédéterminée

- un dispositif d'amortissement d'oscillations de puissance continu (60), conçu pour mettre en œuvre les étapes de correction d'un gain et d'un décalage dans soit la valeur de puissance réactive de référence corrigée dans le cas où l'amortissement d'oscillations de puissance commutable est déclenché, ou dans la valeur de puissance réactive de référence ($Q_{réf}$) dans le cas où l'amortissement d'oscillations de puissance commutable n'est pas déclenché, compensant ainsi un gain et un retard causés par le dispositif de commande de puissance réactive,
- dans lequel le dispositif de commande de parc éolien (12) est conçu pour produire un point de consigne de puissance réactive ($Q_{set, \, WTGs}$) à au moins une parmi la pluralité d'éoliennes (WTG 1-5) basé sur au moins une parmi la valeur de puissance réactive de référence ($Q_{ref}$) et la valeur de puissance réactive de référence corrigée produite par le dispositif d'amortissement d'oscillations de puissance commutable (POD).

**9.** Parc éolien selon la revendication 8, dans lequel le dispositif de commande de parc éolien comprend une unité de commutation conçue pour déterminer une valeur de fréquence et une valeur d'amplitude à partir des données d'oscillations filtrées et pour commuter le dispositif POD basé sur au moins un des critères suivants :

  ◦ la valeur de fréquence déterminée à partir des données d'oscillations filtrées tombant dans un intervalle prédéterminé de fréquences et
  ◦ la valeur d'amplitude déterminée à partir des données d'oscillations filtrées dépassant une valeur seuil prédéterminée.

**10.** Parc éolien selon la revendication 8 ou 9, étant conçu pour amortir des oscillations électromécaniques sur le système électrique selon l'un de procédés précédents des revendications 1 à 8.

Fig. 1

EP 3 322 060 B1

Fig. 2

Fig. 3

Fig. 4

82(58)   Fig. 5

26

$U_{set}$

$\Delta U$

24

$Q_{ref}$

30

$Q_{ref}$

41  42

$K_P$

$Q_{POD}$

$\dfrac{T_w s}{T_w s + 1}$   $K_{PSS}$   $\dfrac{T_{11}s+1}{T_{12}s+1}$   $\dfrac{T_{21}s+1}{T_{22}s+1}$

$K_I$   $\dfrac{1}{s}$

40

34   36   38   21

POD1

44

$U_{meas}$   28

$Q_{meas}$   29

Fig. 6

**Simulation POD1**

U [pu]  1.07  1.06  1.05

Q  -10 -12 -14 -16 -18

U (contr. input)
Q PoC

4   6   8   10
t [s]

**Measurement POD1**

1.03  1.02  1.01

Q [MVAr]  2.5  0  -2.5  -5  -7.5  -10

U (contr. input)   Q PoC

598   600   602   604   606   608
t [s]

**Simulation POD2**

U [pu]  1.07  1.06  1.05

Q  -10 -12 -14 -16 -18

U (contr. input)
Q PoC

4   6   8   10
t [s]

**Measurement POD2**

1.05  1.04  1.03  1.02  1.01  1  0.99

Q [MVAr]  10  7.5  5  2.5  0  -2.5  -5

U (contr. input)
Q PoC

144   146   148   150   152
t [s]

Fig. 7

Fig. 8

## REFERENCES CITED IN THE DESCRIPTION

**Patent documents cited in the description**

- WO 2013004252 A2
- EP 2499714 A2
- US 8618694 B2
- EP 2516164 A2
- US 20160141991 A1
- EP 2594004 B1
- US 20100109447 A1